# EUROPEAN PATENT SPECIFICATION

(11) **EP 2 432 747 B1**
(45) Date of publication and mention of the grant of the patent: **17.04.2019**
(21) Application number: 10720817.5
(22) Date of filing: 20.05.2010
(51) Int. Cl.: C04B 24/26, C04B 24/28, C04B 28/14

(54) **Method of producing GYPSUM BUILDING BOARDS**
Verfahren zur Herstellung von GIPSBAUPLATTEN
Procédé pour la préparation des PANNEAUX DE CONSTRUCTION EN PLÂTRE

(30) Priority: 20.05.2009 GB 0908650
(43) Date of publication of application: 28.03.2012
(73) Proprietor: BPB Limited, Coventry, West Midlands CV3 2TT (GB)
(72) Inventor: FISHER, Robin, Loughborough Leicestershire LE12 6JS (GB); VAN DAMME, Henry, F-75231 Paris Cedex 05 (FR); WALTON, Richard, Ian, Coventry West Midlands CV4 7AL (GB)
(74) Representative: Murgitroyd & Company
(86) International application number: PCT/GB2010/050826
(87) International publication number: WO 2010/133886

(56) References cited:
- WO-A2-2009/068899
- US-B1- 7 261 772

## Description

The present invention concerns the production of gypsum building boards.

Gypsum building boards are well known and can be surface reinforced, for example plasterboard (which is generally reinforced with paper liners) or gypsum board (which may be reinforced at or near the surface by a woven or non-woven reinforcement, or solely reinforced in its core).

Gypsum board is generally produced by shaping gypsum stucco slurry (and optionally fibre reinforcement), through an extruder or between rollers or belts. For surface reinforced gypsum board, the gypsum slurry is sandwiched between surface reinforcements before shaping. In this arrangement, the edges of the surface reinforcement or liner sheets are typically sealed together. After shaping of the gypsum board, the wet slurry is allowed to set and the set board is cut into desired lengths and dried to form the final board.

It has been found that water-swellable clays present in some natural sources of gypsum tend to increase the water demand of the slurry which ultimately forms the plaster, by forming a flocculated structure in the presence of calcium ions.

It has been proposed in US patent 7261772 to add to such clays a comb-branched copolymer that is formed from a polyether having terminal unsaturated groups, for example by polymerising a polyether macromonomer having a polyalkylene oxide chain, reacted with an unsaturated monomer such as acrylic acid or methacrylic acid. The polyalkylene oxide is typically derived from ethylene oxide, propylene oxide, butylenes oxide or the like; for example a polyethylene glycol or polypropylene glycol, or random or block copolymers thereof. The above US patent suggests that certain amine compounds are necessary in the gypsum composition- specifically mentioned are aliphatic amines, quaternary amines, alkoxylated amines and amine oxides. There is no mention of the use of amines in which the amine group is present in a polymer repeat unit.

We have also previously proposed, in our WO2009/068899, the use of a basic water-soluble polymer having preferential affinity for clay instead of the amine compounds specified in the above US patent. Among those mentioned are polyvinyl alcohol, polyvinyl pyrrolidone and certain cold water soluble starch derivatives.

We have found that further improvements can be achieved if certain basic nitrogen-containing water-soluble polymers having preferential affinity for clay are used instead of such an amine or basic water-soluble polymer.

Accordingly to the invention, therefore, there is provided a method of producing gypsum building board from a gypsum slurry containing a water-swellable clay, as claimed in the accompanying claims.

We have found that clays present in gypsum interfere with the action of comb-branched polymer fluidisers, lowering the dose efficiency of such fluidisers. The latter fluidisers become preferentially adsorbed onto clays because the latter are more highly charged.

We have further found that the water-soluble basic polymers present in the gypsum slurry can preferentially adsorb onto clay present in the slurry, thereby performing two functions, as follows:
1) to disperse the clay particles, which lowers the water gauge slightly; and
2) to block the sites which would otherwise be occupied by added fluidiser, such blocking allowing the fluidiser to perform its desired function of fluidising the plaster particles, which in turn results in further lowering of the water gauge.

The polymers used according to the invention may be cationically charged, with quarternary ammonium groups or secondary or tertiary amine groups in main chains, branch chains, or pendant groups. When the polymers contain primary amine groups, the latter are in pendant groups.

A first group of basic polymers containing amine groups for use according to the invention are ones derived from monomers having a single polymerizable entity per molecule (such as an olefinic bond or a cleavable heterocyclic ring), the remainder of the monomer being preferably saturated and/or preferably containing the amine as a primary or secondary group.

A preferred example of such a polymer, which contains secondary or tertiary amine groups in the backbone when polymerised, is a polyethyleneimine type polymer (which will also have amine groups in side chains). When such a polyethyleneimine polymer is employed according to the invention it is preferred that the average molecular weight thereof is less than about 20,000 g/mol, especially less than about 3,000. Such polymers may result in advantageous foam stability in addition to lowered water gauge.

Polyethyleneimine typically has the following structure, showing that the polymer generally contains secondary and tertiary amine groups in the backbone, and primary, secondary and tertiary groups in side chains.

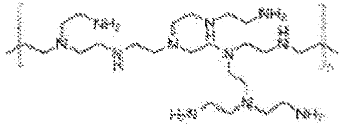

Polyvinyl amine, poly allyl amine and polyvinyl pyridine are further prefferred examples of such basic water-soluble polymers for use according to the invention, the polyvinyl pyridine typically being in quaternary form.

The basic water-soluble polymer may contain pendant amine or quaternary ammonium groups, examples of such a polymer being a poly-, mono- or di-olefinically substituted amine, such as an allyl amine type polymer or a polymer of crotyl amine, of a methylallyl amine, or a cinnamyl amine or the like.

A second group of basic polymers, for use according to the invention, includes a poly(diallyldialkyl ammonium) halides. The latter polymer preferably has a mean molecular weight of less than 200 kdaltons, such as not more than 100 kdaltons. Poly(diallylalkylamine)polymers are, however, less preferred.

It is preferred that any amionic species in such water-soluble polymers are such as to be compatible with gypsum and cause substantially no deleterious interaction therewith. It is further preferred that such ionic species do not form hydrated forms. In some embodiments, therefore it is preferred that the basic polymer should be free of chloride ions, an example of such a polymer being a polyethylene imine or a poly allyl amine as indicated above.

Such basic water-soluble polymers for use according to the invention have preferential affinity for the clay (relative to the comb-branched copolymer) and are capable of bonding to the clay, thereby helping to disperse the clay and inhibiting deleterious interaction with the comb-branched copolymer fluidiser. This effect helps to improve the dose efficiency of the fluidiser. It is an advantage of the present invention that polyoxyalkylenes can be omitted, as such polymers generally require use in combination with an amine as described above. Such a combination is not needed according to the invention.

A preferred water-soluble polymer for use according to the invention is one which is soluble in cold water (that is, water at a temperature of no more than 30°C, such as at 20°C), in order that the polymer can be supplied as an aqueous solution - thereby avoiding the need for an extra step to dissolve the polymer in hot water before addition to a slurry mixer.

A preferred amount of such a water-soluble polymer is from 0.1 to 2 grams per gram of clay present in the slurry.

Such a polymer can perform several functions simultaneously, the most significant being the following:
1) to disperse the clay allow a reduction in water demand, and
2) to increase the efficiency of comb-based copolymer based fluidisers allowing a reduction in water demand.

The comb-based copolymer fluidiser is preferably present in an amount of 0.005 to 1% based on the total weight of the stucco. The comb-based copolymer may be produced by a method as described in, for example, US Patent 6527850, 6869988 and 7070648.

The water-soluble polymer and/or the comb-based copolymer may each be added to a whipped aqueous foam to be mixed with a gypsum slurry, such an aqueous foam being produced by foaming water containing at least one foaming agent. Polyethyleneimines as indicated above are advantageous water-soluble polymers, especially when such a whipped aqueous foam is employed.

When an aqueous foam is used in the method according to the invention, the resulting board is lighter because it contains air bubbles, as is well known.

The water present in such a foam is typically ground water or tap water, which may have been filtered. Other non-deleterious materials, adjuvants and ingredients may, when appropriate, be present in the water from which the foam is made.

The gypsum slurry which is mixed with the whipped aqueous foam comprises hydratable gypsum (calcium sulfate), which has generally been obtained by gypsum calcination. The slurry may contain other non-deleterious mineral materials and/or ions such as phosphate and/or magnesium ions. The hydratable calcium sulfate may be, for example, anhydrous calcium sulfate (anhydrite II or III) or a calcium sulfate hemihydrate (CaSO₄.0.5 H₂O) in its alpha- or beta- crystalline form.

The gypsum is typically mixed with water to form a slurry, before mixing with the aqueous foam described above; the water from which the slurry is made is typically ground water or tap water, which may have been filtered. Other non-deleterious materials, adjuvants and ingredients may, when appropriate, be present in the water from which the slurry is made.

The pH of the slurry is typically in the range 6.5 to 9.5, and the slurry may contain optional further ingredients, such as starch, water reducing agents, moisture repellents (such as silicone oils or waxes), reinforcing fibres, set accelerators and retarders, deformation inhibitors (such as anti-sagging agents), anti-shrink additives, recalcination inhibitors, foam stabilisers, levelling aids, bactericides, fungicides, pH adjusters, colouring agents, fire retardants and fillers (such as particulate mineral material or plastics, which may in some embodiments be in expanded form).

In the production of gypsum board according to the invention, the slurry may contain fibre reinforcement, such as glass fibres (typically cut fibres). The gypsum board produced according to the invention may be with or without surface reinforcement or liner sheets; when surface reinforcement is used, it may, for example, be of fibre scrim or fibre mesh.

When gypsum building board is produced according to the invention, it is preferably formed to a desired thickness by extrusion or pressing between rollers or belts.

The present invention extends to gypsum building board comprising a set aqueous gypsum slurry containing a water swellable clay, a comb-based copolymer fluidiser and a hydrophilic water-soluble basic polymer consisting essentially of carbon, nitrogen and hydrogen and having amine groups (which may be primary, secondary, tertiary or quaternary) in the backbone and/or in the side chain, the water-soluble polymer having preferential affinity for clay.

Certain aspects and features of the present invention will now be illustrated by the following worked Examples.

### EXAMPLE 1

200 g of stucco from a natural gypsum known to contain clay was used in each test.

Water at 40°C was added in the weighed amount into a small Waring blender and 0.1% trisodium citrate (w/w stucco) as retarder was added to the blend along with solid additives, and the blender was operated for 10 seconds to dissolve the retarder.

Ethacryl M (a commercially available comb-based copolymer which is an ethoxylated acrylic acid polymer) from LyondellBasell and other liquid additives as appropriate were added at this stage. Then, the stucco was sprinkled onto the solution over 30 seconds and left to stand for 30 seconds. Mixing time was 10 seconds on low speed. The slump diameter of the slurry was measured on the falling plate consistometer as described in Section C.3.1.1 of BS 1191: Part 1: 1973. The mixing water level was adjusted to achieve a certain consistency given by the slump diameter. Once 2 repeats were within the range of 58 - 60 mm, the level of water was noted as 'water demand'.

The clay modifiers were poly DADMAC 1 (with a molecular weight of approx 100K); poly DADMAC 2 (with a molecular weight of 100 to 200K); poly DADMAC 3 (with a molecular weight of 400 to 500K); and, by way of comparison, silanised partially hydrolysed polyvinyl alcohol - Wacker Polyviol 2700 (Polyviol).

The results summarised in the following Table 1 show the advantageous reduced water demand achieved by adding a comb-based polymer and a cationically charged polymer to an exemplary stucco containing clay. Water demand reduction = (Water demand from control with no comb-based polymer or clay modifier - Water demand from given formulation).

**Table 1**

| **Clay modifier** | **Addition (wt% actives on stucco)** | **Water demand reduction (g/ 100g)** | | | |
|---|---|---|---|---|---|
| | | **0wt% Ethacryl** | **0.1wt% Ethacryl** | **0.2wt% Ethacryl** | **0.3wt% Ethacryl** |
| Poly(DADMAC)1 , Mw <100k g/ mol | 0.25 | 0 | 14 | 20 | 20 |
| Poly(DADMAC)2, Mw 100-200k g/ mol | 0.25 | 2 | 12 | 15 | 17 |
| Poly(DADMAC)3, Mw 400-500k g/ mol | 0.25 | 2 | 9 | 14 | 16 |
| Silanised partially hydrolysed polyvinyl alcohol - Wacker Polyviol 2700 | 0.25 | 0 | 9 | 13 | 19 |

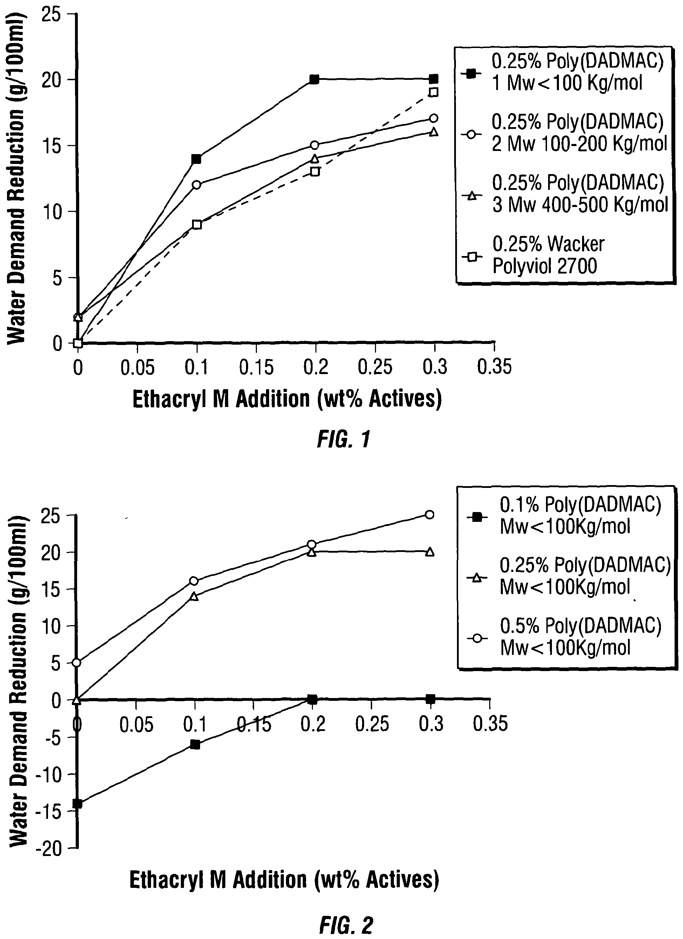

The above results details are summarised in Figure 1 of the accompanying drawings. Figure 2 of the accompanying drawings is similar, but shows varying amounts of Poly(DADMAC) 1 - namely 0.1%, 0.25% and 0.5%, respectively.

Figure 2 shows that water demand values were substantially reduced for amounts of Poly(DADMAC)1 of 0.25% or more. This shows that it is desirable for this particular stucco to include the polymer in an amount exceeding 0.1%, such as at least about 0.2% by weight. The amount depends on the amount of clay in the stucco.

### EXAMPLE 2

Example 1 was repeated using as the stucco a second natural gypsum known to contain clay, and the Ethacryl replaced by "Mighty 21 EG" which is commercially available from Kao.

The results summarised in the following Table 2 show the advantageous reduced water demand achieved by adding a comb-based polymer and a polyethyleneimine or poly allyl amine to an exemplary stucco that contains clay.

**Table 2**

| **Clay modifier** | **Addition (wt% actives on stucco)** | **Water demand reduction (g/ 100g)** | | | |
|---|---|---|---|---|---|
| | | **0wt% Mighty** | **0.1wt% Mighty** | **0.2wt% Mighty** | **0.3wt% Mighty** |
| Poly(ethyleneimine) with a solution average Mw of approx 1800 | 0.25 | -2 | 11 | 18 | 26 |
| Poly allyl amine Mw 1,000 | 0.25 | 3 | 13 | 23 | 30 |
| Poly allyl amine Mw 15,000 | 0.25 | 6 | 18 | 25 | 32 |
| Poly(DADMAC) Mw 8,500 | 0.25 | 3 | 11 | 18 | 26 |

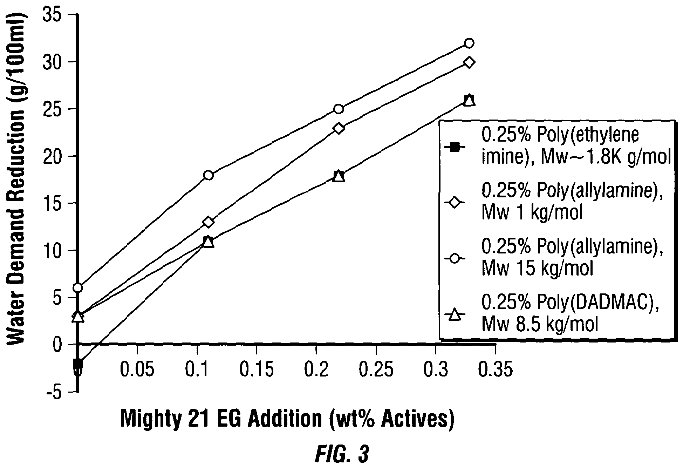

The above results details are summarised in Figure 3 of the accompanying drawings. Figure 3 shows that water demand values were substantially reduced for a clay-containing gypsum containing the specified polymers in the amounts indicated.

## Claims

1. A method of producing gypsum building board, which method comprises (a) providing an aqueous gypsum slurry containing a water swellable clay, in which there is further added to the gypsum slurry a comb-based copolymer fluidiser and a water-soluble basic polymer having a preference to adsorb onto clay, and
(b) allowing a layer of the aqueous gypsum slurry to set so as to form a board, wherein said water-soluble basic polymer consists essentially of carbon, nitrogen, and hydrogen and has amine groups in the polymer backbone and/or in the polymer side chains;
said water-soluble basic polymer either comprising a poly(diallyldialkylammonium halide); or being derived from one or more monomers each having a single polymerisable entity such as an olefinic bond or a cleavable heterocyclic ring per monomer molecule.

2. A method according to claim 1, wherein the basic polymer is derived from one or more monomers each having a single polymerisable entity such as an olefinic bond or a cleavable heterocyclic ring per monomer molecule and further wherein the basic polymer comprises a polyethyleneimine or a poly allylamine.

3. A method according to claim 1, wherein the polymer is cationically charged.

4. A method according to any one of claims 1 to 3, wherein the polymer is soluble in cold water.

5. A method according to any of claims 1 to 4, wherein the comb-based copolymer fluidiser comprises a polymer of a polyalkoxylated acrylic or methacrylic acid.

6. A method according to any claims 1 to 5, wherein the slurry is fed between spaced surface reinforcements so as to form a sandwich structure and the slurry is allowed to set between the surface reinforcements.

7. A method according to claim 6, wherein the slurry contains fibre reinforcement.

## Patentansprüche

1. Verfahren zur Herstellung von Gipsbauplatten, welches Verfahren umfasst: (a) Bereitstellen eines wässrigen Gipsschlamms, der einen wasserquellbaren Lehm enthält, wobei dem Gipsschlamm ferner einen Kamm basierten Copolymer-Fluidisierer und ein wasserlösliches Basispolymer hinzugefügt wird, das eine Bevorzugung aufweist, sich auf den Lehm zu adsorbieren und (b) einer Schicht des wässrigen Gipsschlamms zu erlauben sich abzubinden, um eine Platte zu bilden, wobei das wasserlösliche Basispolymer im Wesentlichen aus Kohlenstoff, Stickstoff und Wasserstoff besteht und Amingruppen in der Polymer-Hauptkette und/oder in den Polymer-Seitenketten aufweist;
wobei das wasserlösliche Basispolymer entweder ein Poly(Diallyldialkylammoniumhalegonid) umfasst; oder von einem oder mehreren Monomeren abgeleitet ist, wobei jede eine einzelne polymerisierbare Entität wie beispielsweise eine olefinische Verbindung oder einen spaltbaren Heteroring pro Monomermolekül aufweist.

2. Verfahren nach Anspruch 1, wobei das Basispolymer von einem oder mehreren Monomeren abgeleitet ist, wobei jedes eine einzelne polymerisierbare olefinische Verbindung oder einen spaltbaren Heteroring pro Monomermolekül aufweist und ferner wobei das Basispolymer ein Polyethylenimin oder ein Polyallylamin umfasst.

3. Verfahren nach Anspruch 1, wobei das Polymer kationisch geladen ist.

4. Verfahren nach einem der Ansprüche 1 bis 3, wobei das Polymer in Kaltwasser löslich ist.

5. Verfahren nach einem der Ansprüche 1 bis 4, wobei der Kamm basierte Copolymer-Fluidisierer ein Polymer aus einer polyalkoxylierte Acryl- oder Methacrylsäure umfasst.

6. Verfahren nach einem der Ansprüche 1 bis 5, wobei der Schlamm zwischen beabstandete Oberflächenverstärkungen gespeist wird, um eine Sandwich-Struktur zu bilden, und dem Schlamm erlaubt wird, sich zwischen den Oberflächenverstärkungen abzubinden.

7. Verfahren nach Anspruch 6, wobei der Schlamm Faserverstärkung enthält.

## Revendications

1. Un procédé de production d'un panneau de construction en plâtre, ledit procédé comprenant (a) la fourniture d'une pâte de plâtre aqueuse contenant un argile pouvant gonfler dans l'eau, dans lequel il est ajouté en outre à la pâte de plâtre un fluidiseur de copolymère en peigne et un polymère basique soluble dans l'eau possédant une préférence d'adsorption sur de l'argile, et (b) autoriser une couche de la pâte de plâtre aqueuse à durcir de façon à former un panneau, où ledit polymère basique soluble dans l'eau se compose essentiellement de carbone, d'azote et d'hydrogène et possède des groupes amine dans la chaîne principale de polymères et/ou dans les chaînes latérales de polymères,
ledit polymère basique soluble dans l'eau comprenant soit un poly(halogénure de diallyldialkylammonium), ou étant dérivé d'un ou de plusieurs monomères, chacun d'eux possédant une entité polymérisable unique telle qu'une liaison oléfinique ou un anneau hétérocyclique fissible par molécule de monomère.

2. Un procédé selon la Revendication 1, où le polymère basique est dérivé d'un ou de plusieurs monomères, chacun d'eux possédant une entité polymérisable unique telle qu'une liaison oléfinique ou un anneau hétérocyclique fissible par molécule de monomère et en outre où le polymère basique comprend un polyéthylèneimine ou un polyallylamine.

3. Un procédé selon la Revendication 1, où le polymère est chargé cationiquement.

4. Un procédé selon l'une quelconque des Revendications 1 à 3, où le polymère est soluble dans de l'eau froide.

5. Un procédé selon l'une quelconque des Revendications 1 à 4, où le fluidiseur de copolymère en peigne comprend un polymère d'un acide méthacrylique ou acrylique polyalcoxylé.

6. Un procédé selon l'une quelconque des Revendications 1 à 5, où la pâte est alimentée entre des renforts de surface espacés de façon à former une structure en sandwich et la pâte est autorisée à durcir entre les renforts de surface.

7. Un procédé selon la Revendication 6, où la pâte contient un renfort en fibres.
